# DEMANDE DE BREVET EUROPEEN

(11) **EP 2 423 047 A2**
(43) Date de publication de la demande: **29.02.2012**
(21) Numéro de dépôt: 11178681.0
(22) Date de dépôt: 24.08.2011
(51) Int. Cl.: B60Q 1/05, B60Q 1/26, B60Q 1/00

(54) **Dispositif d'éclairage et/ou de signalisation à élément diurne mobile**

(30) Priorité: 31.08.2010 FR 1056875
(71) Demandeur: VALEO VISION, 93012 Bobigny Cedex (FR)
(72) Inventeur: Bakacha, Malik, 44370 Belligné (FR); Puente, Jean-Claude, 93190 Livry Gargan (FR); Albou, Pierre, 75013 Paris (FR)

(57) **Abrégé**

L'invention concerne un dispositif d'éclairage et/ou de signalisation agencé pour réaliser au moins une première fonction photométrique 1 et une deuxième fonction photométrique 2, caractérisé en ce que le dispositif comprend au moins un élément mobile 8 sur lequel est installée au moins la première fonction photométrique 1 et dont le mouvement est placé sous la dépendance de la commande de la deuxième fonction photométrique 2.

Application aux véhicules automobiles.

## Description

Le secteur technique de la présente invention est celui des dispositifs d'éclairage et/ou de signalisation pour véhicule automobile.

Une nouvelle fonction d'éclairage est apparue récemment sur les véhicules automobiles. Il s'agit d'un éclairage allumé en conditions diurnes. Cette fonction est assurée soit par l'allumage d'un projecteur habituellement réservé aux conditions nocturnes, soit par l'installation d'un dispositif d'éclairage spécifique monté sur le pare-choc avant du véhicule.

Dans ce second cas, l'installation du dispositif d'éclairage diurne doit répondre à une norme dédiée en matière de positionnement sur le véhicule ainsi qu'en matière de puissance du faisceau lumineux du dispositif d'éclairage diurne.

Un inconvénient de ce type de dispositif d'éclairage spécifique aux conditions diurnes est qu'il requiert une place importante. En effet, certains véhicules comme par exemple les voitures de sport, présentent un pare-choc avant particulièrement profilé, avec des arêtes vives et où il n'est pas possible d'installer un tel dispositif d'éclairage diurne tout en respectant la norme mentionnée plus haut. En outre, ces véhicules de sport présentent souvent des optiques de phares escamotables pour améliorer l'aérodynamique et la ligne esthétique du véhicule. Dans un tel cas, il n'est pas possible d'utiliser le projecteur dédié aux conditions nocturnes pour réaliser la fonction d'éclairage diurne car cela reviendrait à maintenir ouvert constamment ces optiques quelques soient les conditions d'utilisation du véhicule. Une telle possibilité va à l'évidence à l'encontre de la fonction escamotable de cette optique et annihile les bénéfices aérodynamique et esthétique recherchés par ces constructeurs.

Par ailleurs, les constructeurs de ces véhicules de sport souhaitent conserver une ligne esthétique de leur véhicule la plus épurée alors que l'installation d'un tel dispositif d'éclairage diurne est susceptible de nuire à cette ligne esthétique.

Enfin, la place requise pour installer ce dispositif d'éclairage diurne dans le pare-choc demande des efforts de conception et de réalisation supplémentaires aux fabricants de ces pare-chocs.

Il convient donc de trouver une solution qui évite ces inconvénients et dans laquelle le dispositif d'éclairage diurne peut être installé sans nuire à l'esthétique du véhicule tout en respectant la norme précitée.

Le but de la présente invention est donc de résoudre les inconvénients décrits ci-dessus principalement en intégrant la fonction d'éclairage diurne à un élément d'éclairage ou de signalisation du véhicule de telle sorte à la rendre apparente de jour tout en cédant sa place à l'éclairage classique en conditions nocturnes.

L'invention a donc pour objet un dispositif d'éclairage et/ou de signalisation agencé pour réaliser au moins une première fonction photométrique et une deuxième fonction photométrique, caractérisé en ce que le dispositif comprend au moins un élément mobile sur lequel est installée au moins la première fonction photométrique et dont le mouvement est placé sous la dépendance de la commande de la deuxième fonction photométrique. On notera tout d'abord que la première fonction photométrique est avantageusement distincte de la deuxième fonction photométrique. Il peut s'agir par exemple, pour la première fonction photométrique, d'un éclairage et/ou d'une signalisation diurne et pour la deuxième fonction photométrique, d'un feu de croisement et/ou de route. On comprend également que le mouvement de l'élément mobile est avantageusement actionné quand la deuxième fonction photométrique est activée. Ce mouvement de l'élément mobile peut se traduire par un déplacement de la première fonction photométrique de sorte à la rendre significativement moins visible.

Selon une première caractéristique de l'invention, la commande de la première fonction photométrique peut être placée sous la dépendance de la deuxième fonction photométrique. En effet, l'allumage ou l'activation de la première fonction photométrique est mis en oeuvre en l'absence de commande ou d'activation de la deuxième fonction photométrique et son extinction ou sa désactivation est opérée par la mise en fonctionnement de la deuxième fonction photométrique, par exemple par allumage d'une lampe de ville, d'un feu de croisement ou d'un feu de route.

Selon une deuxième caractéristique de l'invention, l'élément est mobile en rotation. On garantit ainsi aisément le dégagement de la première fonction photométrique pour laisser place à la deuxième fonction photométrique.

Selon une autre caractéristique de l'invention, la première fonction photométrique comprend au moins une source lumineuse comprenant au moins une diode électroluminescente. Ce type de source est particulièrement avantageuse de part sa faible consommation électrique et ses faibles déperditions thermiques comparées à son rendement lumineux.

Selon encore une caractéristique de l'invention, la première fonction photométrique prend la forme d'un moyen d'éclairage qui comprend un support recevant ladite source lumineuse. Le support forme ainsi un châssis de réception de la source et il peut être avantageusement mis à profit pour faire un rappel de teinte de la carrosserie. Ainsi, le support comprend au moins une face orientée du côté de la source lumineuse, ladite face présentant une couleur identique à celle de la carrosserie. Il s'agit par exemple d'une application d'une couche de peinture. Enfin, dans un tel cas, le moyen d'éclairage comprend un composant, par exemple une glace, au moins translucide, et avantageusement transparente de sorte à rendre apparente la face du support.

Selon encore une autre caractéristique de l'invention, l'élément mobile et le support sont solidaires. Ils forment par exemple une seule et même pièce.

Avantageusement, la deuxième fonction prend la forme d'un projecteur. Ce dernier comprend des composants tels que source lumineuse, lentille, réflecteur et dispositif de coupure pour le passage de la fonction route à la fonction croisement.

Avantageusement encore, l'élément supporte la deuxième fonction photométrique. Ceci garantit que le mouvement de l'élément mobile entraîne également avec lui la deuxième fonction photométrique, par exemple un projecteur et plus généralement une optique de phare. On vise ici tout particulièrement le cas des phares avant escamotables montés sur les véhicules de sport. La face des phares escamotables habituellement peinte à la teinte de la carrosserie est mise à profit pour recevoir et servir de support à la première fonction photométrique.

La première fonction photométrique et la deuxième fonction photométrique sont mobiles en rotation autour d'un même axe. On garantit dans ce cas une grande simplicité pour intégrer la première fonction photométrique à un phare escamotable existant.

Selon une première variante de l'invention, le dispositif comprend un boîtier à l'intérieur duquel sont installés un projecteur formant la deuxième fonction photométrique et une source lumineuse notamment à diode photoluminescente constitutive de la première fonction photométrique. On vise ici le cas d'une optique de phare ceinte d'un côté par un boîtier et de l'autre par un écran transparent, par exemple une glace délimitant ainsi un volume interne, ce dernier recevant à la fois la première fonction photométrique montée mobile et la deuxième fonction photométrique montée fixe ou mobile par rapport au boîtier.

Selon une caractéristique de l'invention, le moyen d'éclairage forme écran de protection du boîtier. Cette structure est particulièrement avantageuse car on met à profit la présence de la première fonction photométrique pour former une barrière et empêcher une entrée de rayons lumineux (par exemple du soleil) à l'intérieur du boîtier. On comprend donc que la première fonction photométrique est agencée pour former un écran qui protège l'intérieur du dispositif d'éclairage et/ou de signalisation selon l'invention. On évite ainsi une détérioration de certaines parties du boîtier ou du projecteur par concentration de lumière diurne.

Selon une amélioration de l'invention, la première fonction photométrique est agencée pour ou sert également à réaliser une troisième fonction photométrique. Cette troisième fonction photométrique est par exemple la fonction clignotant ou la fonction lampe de ville ou lanterne.

Dans un tel cas, la première fonction photométrique comprend au moins une source lumineuse comprenant une pluralité de diodes électroluminescentes, une partie de ces diodes étant agencée pour réaliser la troisième fonction photométrique. Dans un tel cas, l'autre partie des diodes n'est pas activée ou est activée à des puissances différentes. On met ainsi à profit certains composants de la première fonction photométrique en les utilisant pour la troisième fonction photométrique. Une telle structure permet d'éviter l'emploi des composants habituels relatifs à la fonction lampe de ville tels qu'une source lumineuse dédiée ou encore son faisceau électrique d'alimentation. Cette structure évite également l'ouverture du phare escamotable habituellement effectuée quand la fonction lampe de ville est activée.

Avantageusement, la pluralité de diodes électroluminescentes est montée sur un circuit imprimé qui présente une extrémité, la troisième fonction photométrique étant mise en oeuvre par au moins une diode montée sur ladite extrémité.

D'une manière générale, le moyen d'éclairage peut comprendre au moins un dispositif destiné à conduire et/ou à renvoyer un flux lumineux et un support formé notamment par un circuit imprimé. Ce dispositif destiné à conduire et/ou à renvoyer un flux lumineux est par exemple une lame de renvoi de lumière ou encore un guide de lumière.

Ce guide de lumière peut être constitutif de la première fonction photométrique et/ou de la deuxième fonction photométrique et/ou de la troisième fonction photométrique. Il peut s'agir d'un même guide de lumière exploité pour ces fonctions ou une multiplicité de guides lumière, chaque guide de lumière étant attribué à une de ces fonctions. Ce guide de lumière est formé dans un plastique transparent et conduit la lumière de la source lumineuse vers un ou plusieurs points où il est souhaité de voir apparaître cette lumière. Ce guide de lumière est installé au droit de la ou des diodes électroluminescentes affectées à la fonction. D'une manière générale, le guide lumière ou la lame de renvoi peut être une pièce optique réalisée en un matériau par exemple transparent.

Le guide de lumière est disposé à la périphérie de l'élément mobile ou du support. On garantit ainsi une bonne perception visuelle de la troisième fonction photométrique sans nuire à la première fonction photométrique.

A titre d'exemple, le guide de lumière s'étend de manière à former un arc.

Enfin, le moyen d'éclairage comprend un réflecteur dédié à la première fonction photométrique. Avantageusement, ce réflecteur peut être mise en oeuvre par le guide de lumière évoqué ci-dessus. Il s'agit dans ce cas d'une seule et même pièce. Ce réflecteur présente avantageusement plusieurs paliers joints par des pans obliques, ces pans servant à refléter la lumière en provenance de la source lumineuse.

Un tout premier avantage selon l'invention réside dans la possibilité d'intégrer la fonction d'éclairage diurne sans nuire à l'esthétique du véhicule tout en respectant les critères imposés par la norme en vigueur pour ce type de composant.

Un autre avantage réside dans l'affranchissement de toute difficulté à installer une telle fonction dans un pare-choc avant.

D'autres caractéristiques, détails et avantages de l'invention ressortiront plus clairement à la lecture de la description donnée ci-après à titre indicatif en relation avec des dessins dans lesquels :
- la figure 1 est une vue schématique d'une première variante de réalisation de l'invention où la première fonction photométrique est activée,
- la figure 2 est une vue schématique de la première variante de réalisation de l'invention où la deuxième fonction photométrique est activée,
- la figure 3 est une vue en coupe de la première variante de réalisation où la première fonction photométrique est activée,
- la figure 4 est une vue en coupe de la première variante de réalisation où la deuxième fonction photométrique est activée,
- la figure 5 est une vue en coupe d'une seconde variante de réalisation où la première fonction photométrique est activée,
- la figure 6 est une vue en coupe de la seconde variante de réalisation où la deuxième fonction photométrique est activée,
- la figure 7 est une vue en coupe illustrant certains composants du dispositif selon l'invention selon le second mode de réalisation,
- la figure 8 est une vue de dessus du dispositif selon l'invention intégrant une troisième fonction photométrique.

Il faut noter que les figures exposent l'invention de manière détaillée de sorte à mettre en oeuvre l'invention, lesdites figures pouvant bien entendu servir à mieux définir l'invention le cas échéant.

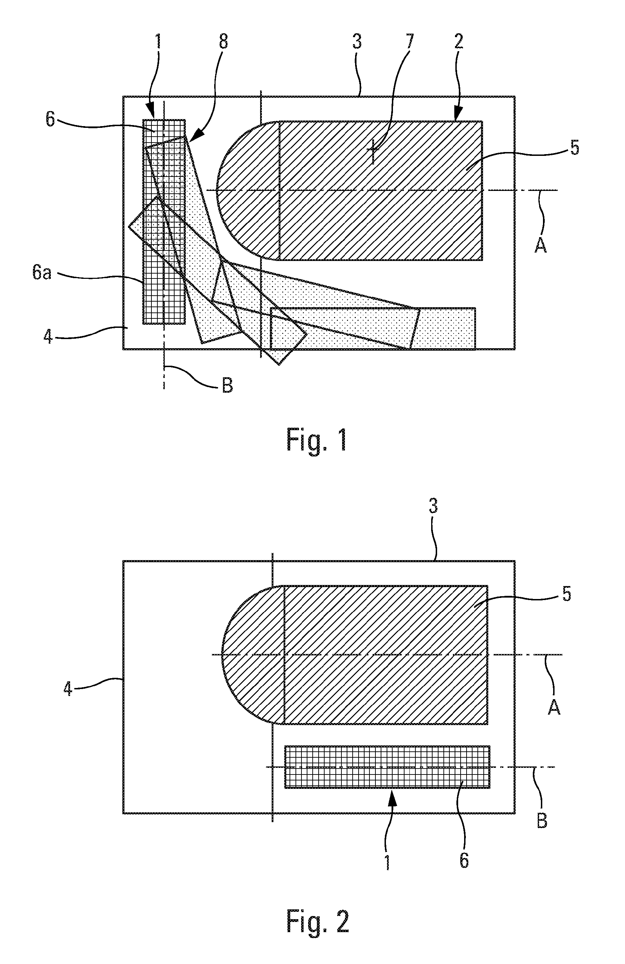

La figure 1 illustre de manière schématique le dispositif d'éclairage et/ou de signalisation en vue de dessus, dans des conditions diurnes. Ce dispositif est conçu pour être installé sur la partie avant du véhicule pour fournir un faisceau lumineux. Il comprend au moins deux fonctions photométriques 1 et 2. La première fonction photométrique 1 est un dispositif d'éclairage diurne, c'est-à-dire dont la mise en fonctionnement intervient en journée. La deuxième fonction photométrique 2 est un dispositif d'éclairage nocturne, c'est-à-dire dont la mise en fonction intervient quand la luminosité ambiante passe en-dessous d'un certain seuil. L'activation ou la commande de cette deuxième fonction photométrique est effectuée à la demande de l'utilisateur du véhicule par actionnement d'un commutateur ou de manière automatique au moyen d'un détecteur de luminosité installé sur le véhicule.

Le dispositif selon l'invention comprend un boîtier 3 qui forme la partie arrière du dispositif. Ce boîtier est en matière plastique opaque et sert à fixer le dispositif sur le véhicule ainsi qu'à cacher les mécanismes internes du dispositif selon l'invention. La section ouverte du boîtier 3 est coiffée ou fermé par une glace 4 transparente qui forme la partie du dispositif visible de l'utilisateur autrement appelée partie avant de l'optique.

La première fonction photométrique 1 prend la forme d'un moyen d'éclairage 6 qui comprend un support et une source lumineuse, cette dernière étant maintenue mécaniquement par le support. Une face avant 6a est transparente pour laisser passer le faisceau lumineux émis par la source lumineuse, cette face transparente 6a étant directement adjacente à la glace 4. En pratique, cette face 6a peut être réalisée au moyen d'une glace en verre ou en plastique transparent.

La deuxième fonction photométrique 2 prend la forme d'un projecteur 5 qui s'étend selon une direction longitudinale A. Ce projecteur 5 comporte par exemple au moins une source lumineuse, cette dernière prenant par exemple la forme d'une lampe à incandescence, une lampe au Xénon ou encore une diode électroluminescente. Ce projecteur 5 comprend par exemple un réflecteur dont la fonction est de renvoyer le faisceau lumineux vers la glace 4, un dispositif de coupure dont la fonction est d'opérer le passage de feu de route à feu de croisement, une lentille qui agit comme un concentrateur de flux lumineux et éventuellement un masque dont la fonction est de cacher certains composants du projecteur 5.

On notera que le projecteur 5 s'étend principalement dans un volume interne délimité par le boîtier 3 alors que le moyen d'éclairage 6 est installé entre le projecteur 5 et la glace 4 quand la deuxième fonction photométrique est inactive. Le moyen d'éclairage 6 s'étend selon une direction longitudinale B par exemple parallèle à la glace 4 de manière à obstruer une partie significative de sa surface. La première fonction photométrique 1, par exemple constitué par le moyen d'éclairage 6, forme ainsi un écran de protection qui empêche les rayons lumineux extérieurs de venir frapper contre le projecteur 5 ou contre la paroi interne du boîtier 3. Cet écran peut être formé par un support constitutif du moyen d'éclairage 6. Cette fonction d'écran ou de barrière est ainsi remplie quand d'une part la deuxième fonction photométrique est inactive (lampe de ville, feu de croisement ou feu de route éteints) et d'autre part quand la direction longitudinale B de la première fonction photométrique 1 est perpendiculaire, ou sensiblement perpendiculaire, à la direction longitudinale A de la deuxième fonction photométrique 2.

La première fonction photométrique est installée ou montée de sorte à être reliée mécaniquement à un élément mobile 8. Dans le cas de la première variante, cet élément mobile 8 peut être une plaque sur laquelle est posé de manière solidaire le moyen d'éclairage 6. L'élément mobile 8 peut également être formé directement par un châssis externe du moyen d'éclairage 6 qui referme le support et la source lumineuse, le support étant solidaire directement ou indirectement du châssis. Alternativement, le support peut aussi former directement le l'élément mobile 8.

L'élément 8 sur lequel est installée la première fonction photométrique peut être mobile en translation, en rotation ou une combinaison de ces deux mouvements. Le moyen d'éclairage 6 constitutif de la première fonction photométrique 1 suit ainsi le mouvement opéré par l'élément mobile 8. A titre d'exemple, la figure 1 illustre par quatre rectangles successifs un mouvement de rotation autour d'un axe symbolisé par la référence 7.

Ce mouvement de l'élément mobile 8 est placé sous la dépendance de la commande de la deuxième fonction photométrique. Par commande, on entend l'activation ou l'allumage ainsi que la désactivation ou l'extinction de la deuxième fonction photométrique 2. Dans ces deux cas, l'élément mobile 8 est mis en mouvement pour passer d'une première position extrême illustrée sur la figure 1 à une seconde position extrême illustrée sur la figure 2. En pratique, la mise en oeuvre du mouvement de l'élément mobile 8 intervient quand l'utilisateur du véhicule demande la mise en fonctionnement de la deuxième fonction photométrique 2, par exemple l'allumage des feux de croisement. Cette information peut être captée directement au niveau du commutateur, directement au niveau du dispositif selon l'invention ou sur le réseau électrique du véhicule, par exemple quand ce dernier est équipé d'un réseau multiplexé du type CAN ou LIN.

La commande, autrement dit l'allumage ou l'extinction, de la première fonction photométrique 1 est également placée sous la dépendance de la deuxième fonction photométrique 2. En effet, l'allumage du feu de croisement provoque l'extinction de la source lumineuse embarquée dans le moyen d'éclairage 6. En sens inverse, l'extinction du feu de croisement provoque l'allumage de la source lumineuse embarquée dans le moyen d'éclairage 6.

La figure 2 montre le même dispositif que celui de la figure 1 mais représenté en conditions d'utilisation nocturnes. L'espace entre la glace 4 et le projecteur 5 est libéré par déplacement de la première fonction photométrique 1. Le moyen d'éclairage 6 constitutif de cette première fonction est alors localisé latéralement au projecteur 5 dans le volume interne délimité par le boîtier 3, et plus particulièrement par la partie arrière du boîtier 3. Dans cette situation, l'axe longitudinal B de la première fonction photométrique 1 s'étend parallèlement, ou sensiblement parallèlement, à la direction longitudinal A du projecteur 5. Un tel arrangement permet de libérer en totalité l'espace entre la glace 4 et le projecteur 5 et le moyen d'éclairage 6 n'entrave pas le faisceau lumineux du projecteur 5. De manière alternative, le moyen d'éclairage 6 peut être localisé au dessus du projecteur 5 en encore en dessous de ce dernier.

Dans l'exemple exposé ci-dessus, le moyen d'éclairage 6 est disposé latéralement au projecteur 5. Latéralement s'entend comme toutes positions autour ou derrière le projecteur 5 pour autant que le moyen d'éclairage 6 ne gène pas la mise en oeuvre de la deuxième fonction photométrique 2.

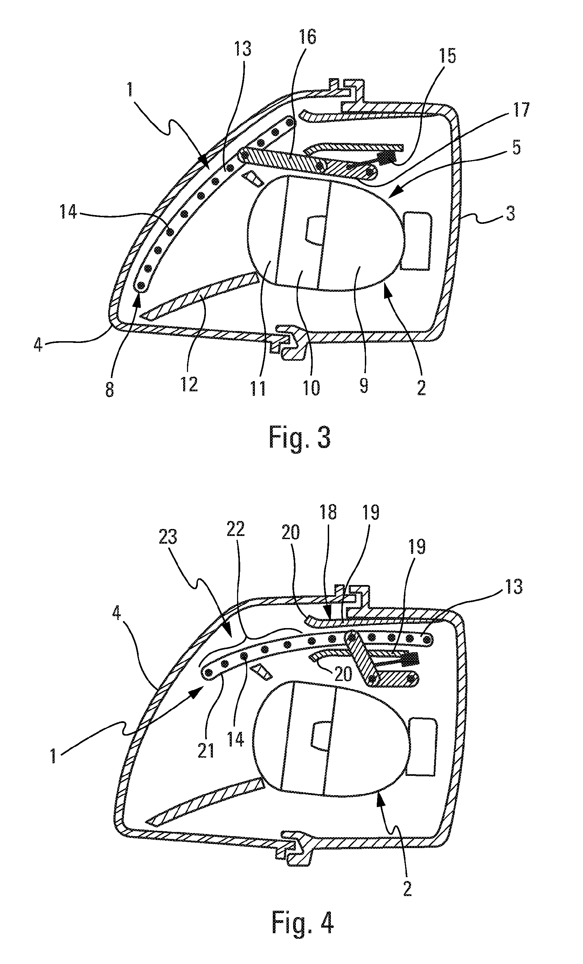

La figure 3 montre un exemple concret de réalisation d'une optique de phare selon la première variante de réalisation.

Le boîtier 3 et la glace 4 délimitent un volume interne dans lequel s'étendent le projecteur 5 et le moyen d'éclairage 6. Le projecteur 5 comprend ici une source lumineuse 9 suivie d'un dispositif de coupure 10 et d'une lentille 11. Cet ensemble constitue donc la deuxième fonction photométrique 2. Juste après le projecteur 5 est installé un masque 12 de forme sensiblement conique et dont le centre présente un trou qui correspond sensiblement aux dimensions de la lentille 11.

La première fonction photométrique 1 est ici représentée en position active, c'est-à-dire entre la glace 4 et le masque 12 et en situation allumée.

Cette première fonction photométrique 1 comprend un support qui sert à maintenir mécaniquement la source lumineuse formée par une pluralité de diodes électroluminescentes 14. Le support prend la forme d'un arc de cercle de rayon sensiblement équivalent au galbe formé par la glace 4.

Le mouvement du support 13 qui forme ici l'élément mobile 8 est opéré au moyen d'un système d'actionnement 15, par exemple mécanique, électrique ou pneumatique, qui agit sur une tringlerie constituée de deux leviers 16 et 17.

Le boîtier 3 comprend une paroi interne de laquelle débouche un dispositif de maintien 18 de la première fonction photométrique 1. Ce dispositif de maintien reçoit le support 13 de la première fonction photométrique 1 quand cette dernière est désactivée comme ceci est illustré sur la figure 4. Ce dispositif de maintien 18 a donc pour fonction de maintenir en position désactivée le support 13 pour garantir que ce dernier libère l'espace entre le projecteur 5 et la glace 4 et ainsi n'entrave pas le bon fonctionnement de la deuxième fonction photométrique 2. Ce dispositif de maintien 18 comprend deux rails 19 espacés l'un de l'autre d'une distance équivalente à l'épaisseur du support 13. Chaque rail 19 comprend une extrémité 20 orientée du côté de la glace 4 et ces extrémités sont courbées de sorte à former conjointement un entonnoir qui facilite l'insertion du support 13 dans le dispositif de maintien 18.

Une amélioration de la première variante va maintenant être décrite. On notera tout particulièrement qu'une extrémité 21 du support 13 dépasse hors du moyen de maintien 18 et reste apparente au niveau de la glace 4. La partie 22 de diodes électroluminescentes 14 installées au droit de cette extrémité offre une fonction supplémentaire au dispositif d'éclairage et/ou de signalisation de l'invention. En effet, la première fonction photométrique 1 est agencée pour réaliser une troisième fonction photométrique 23, distincte de la première ou de la deuxième fonction photométrique. En pratique, cette troisième fonction photométrique 23 est une lampe de ville ou lanterne mais il peut également s'agir d'un clignotant. Alors que dans la variante précédente la pluralité de diodes électroluminescentes était éteinte une fois que la deuxième fonction photométrique est activée, on active dans ce cas une partie 22 de ces diodes situées sur l'extrémité 21 du support 13 pour mettre en oeuvre la troisième fonction photométriques 23. On réalise alors la fonction lampe de ville en utilisant la première fonction photométrique 1, plus particulièrement en l'activant en une zone spécifique du support 13, tout en activant la deuxième fonction photométrique 2, le cas échéant. La première fonction photométrique 1 est donc contrôlée selon deux informations distinctes et réalise ainsi la fonction d'éclairage diurne dans une première position extrême (entre projecteur 5 et glace 4) et la fonction lampe de ville ou clignotant dans une seconde position extrême (latéralement, au dessus ou en dessous du projecteur 5) opposée à la première position extrême.

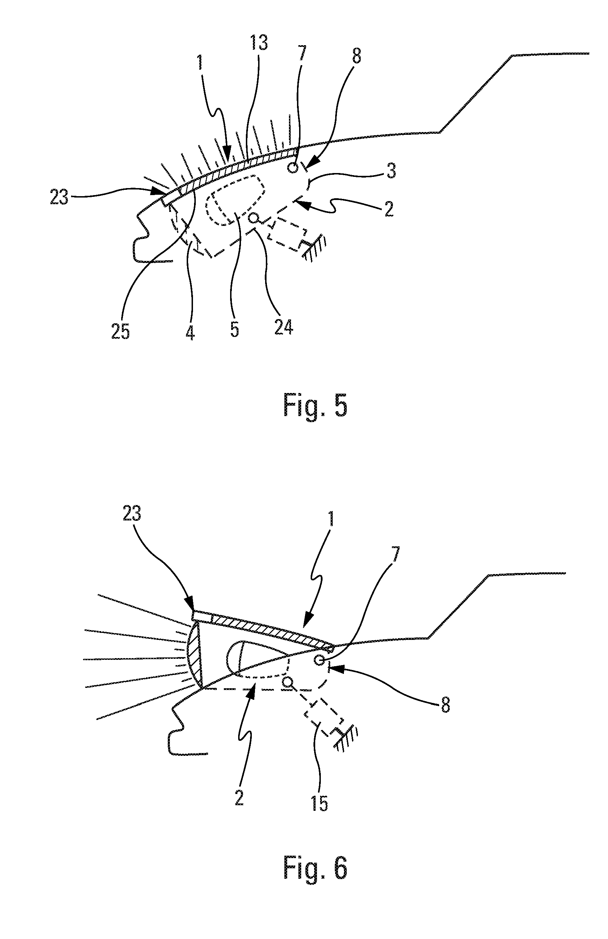

La figure 5 illustre une deuxième variante de réalisation adaptée aux phares escamotables des véhicules de sport. La première fonction photométrique 1 et la deuxième fonction photométrique 2 sont toutes deux rassemblées sur l'élément mobile 8. Ce dernier sert donc de support mécanique à ces deux fonctions photométriques. Dans le cas présent, l'élément mobile 8 est formé par le boîtier 3 qui renferme la deuxième fonction photométrique 2, en l'occurrence le projecteur 5. Le boîtier 3 présente par exemple une glace 4, une paroi inférieure 24 et une paroi supérieure 25. Cette dernière forme le support 13 ou reçoit le support 13 sur lequel est installée la source lumineuse réalisée par une pluralité de diodes électroluminescentes.

La première fonction photométrique 1 et la deuxième fonction photométrique 2 sont mobiles en rotation autour d'un même axe 7. Cette rotation de ces deux fonctions est assurée simultanément puisque les deux fonctions photométriques sont solidaires d'un même élément mobile 8.

Quand la deuxième fonction photométrique 2 est inactive, elle est rabattue à l'intérieur de la carrosserie du véhicule et la première fonction photométrique 1 est activée ou allumée. Il s'agit ici d'une situation en conditions diurnes.

La figure 6 illustre cette même variante mais en conditions nocturnes. Dans de telles conditions, la deuxième fonction photométrique 2 est activée ce qui provoque l'ouverture ou la sortie du phare hors de la carrosserie du véhicule, et éventuellement l'extinction de la première fonction photométrique 1.

Le mouvement de rotation de l'élément 8 autour de l'axe 7 entre la situation de la figure 5 et la situation de la figure 6 est opéré par le système d'actionnement 15. Ce dernier est un système mécanique, électrique ou pneumatique qui est relié par une articulation d'un côté à l'élément mobile 8 et de l'autre à la caisse du véhicule.

La troisième fonction photométrique 23 est également illustrée sur les figures 5 et 6. Comme pour la première variante, il s'agit d'une extrémité du support 13 qui présente au moins une source lumineuse, par exemple une diode électroluminescente.

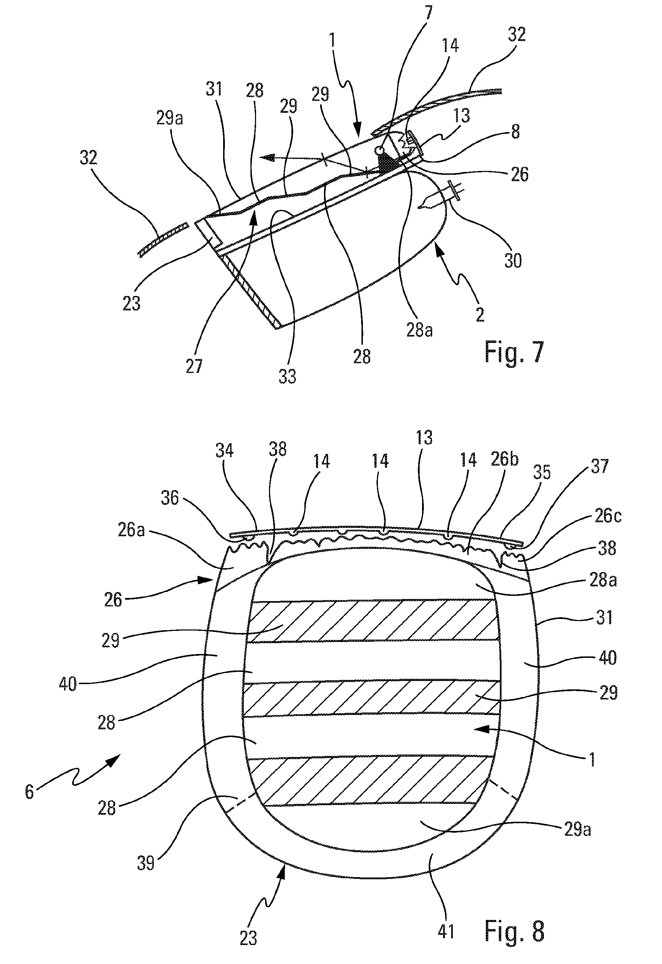

La figure 7 montre en détail la structure du dispositif d'éclairage et/ou de signalisation de la deuxième variante de l'invention. La première fonction photométrique 1 est disposée sur la deuxième fonction photométrique 2 et elles sont reliées l'une à l'autre de manière solidaire. Avantageusement, ces deux fonctions forment un ensemble unitaire.

Contrairement aux figures 5 et 6, l'axe de rotation 7 fait ici partie de la première fonction photométrique 1 en étant relié à l'élément mobile 8. Dans cet exemple de réalisation, le support 13 est formé par un circuit imprimé qui s'étend dans un plan sensiblement perpendiculaire à l'élément mobile 8. Le support 13 est relié mécaniquement à l'élément mobile 8. Le circuit imprimé sert alors de support de réception pour alimenter électriquement et maintenir mécaniquement la pluralité de diodes électroluminescentes 14. Une glace transparente 31 dédiée à la première fonction photométrique 1 prend la forme d'une plaque plane qui s'étend sensiblement parallèlement à l'élément mobile 8. On constate encore que le support 13 et la pluralité de diodes électroluminescentes 14 sont installés à l'extérieur du volume interne délimité par la glace 31 et le l'élément mobile 8.

La glace 31 présente une extrémité 26 immédiatement adjacente à la plaque 13 qui support les diodes électroluminescentes 14. Cette extrémité 26 est conformé en collimateurs dioptriques de sorte à orienter le flux lumineux vers le volume interne délimité par la glace 31 et l'élément mobile 8. On trouve également dans ce volume interne un réflecteur 27 affecté à la première fonction photométrique 1. Il s'agit d'un composant globalement plan installé entre l'extrémité 26 de la glace 31 et une extrémité opposée de cette glace, cette dernière formant la troisième fonction photométrique 23. Ce réflecteur 27 est transparent et comprend une alternance de paliers 28 et de pans obliques 29. Les paliers 28 s'étendent dans un plan sensiblement parallèle au plan dans lequel s'étend l'élément mobile 8 et les pans obliques s'étendent dans un plan orienté selon un angle compris entre 20° et 45° par rapport au plan des paliers 28. Un dernier pan oblique 29a comprend une extrémité qui est en contact avec la glace 31 alors qu'un premier palier 28a présente une extrémité qui s'étend au niveau de l'extrémité prismatique 26. La source lumineuse de la deuxième fonction photométrique 2 est ici représentée sous la forme d'une ampoule à incandescence 30.

Comme pour la variante de la figure 5, on notera que la glace 31 de la première fonction photométrique 1 s'étend dans un plan parallèle et globalement confondu avec le plan de la carrosserie 32 du véhicule. L'élément mobile 8 qui sert ici de plaque de maintien des composants de la première fonction photométrique 1 comprend une face 33 tournée vers la glace 31. Comme la glace 31 et le réflecteur 27 sont transparents, la face 33 est peinte à la teinte de la carrosserie 32 ce qui contribue à améliorer l'intégration esthétique de la fonction éclairage diurne.

Bien entendu, la fonction de réflexion dévolue au réflecteur 27 peut être mise en oeuvre par la face 33, la première fonction photométrique ne comportant ainsi pas de réflecteur.

La figure 8 illustre la première fonction photométrique vue de dessus. On retrouve l'extrémité prismatique 26 de la glace 31 et l'alternance de paliers 28 et de pans obliques 29.

Le support 13 est formé par le circuit imprimé sur lequel sont solidarisées les diodes électroluminescentes 14. Le circuit imprimé présente deux extrémités 34 et 35 sur lesquelles est fixée au moins une diode électroluminescente 36 ou 37. Ces diodes additionnelles 36 et 37 sont constitutives de la première fonction photométrique 1 et/ou de la troisième fonction photométrique 23. L'extrémité prismatique 26 conformée en collimateurs dioptriques est divisée en trois parties 26a, 26b et 26c, la référence 26b désignant une partie centrale installée entre les deux parties latérales désignées par les références 26a et 26c. En pratique, la partie centrale 26b est utilisée pour la première fonction photométrique 1 alors que les parties latérales 26a et 26c sont utilisées pour la troisième fonction photométrique 23. La séparation entre la partie centrale 26b et les parties latérales 26a et 26c est opéré par une saignée 38 qui constitue un enlèvement de matière au niveau de l'extrémité prismatique 26. On évite ainsi que le flux lumineux des diodes additionnelles 36 et 37, quand elles sont utilisées pour la troisième fonction photométrique, ne soit dirigé vers le réflecteur 27 et puisse être perçu comme l'éclairage diurne.

Un guide de lumière 39 est intégré au moyen d'éclairage 6 constituant la première fonction photométrique. Ce guide de lumière 39 peut être constitutif exclusivement de la première fonction photométrique 1 ou exclusivement de la troisième fonction photométrique mais ce guide de lumière 39 peut éventuellement être exploité simultanément pour la première et la troisième fonction photométrique. Alternativement, le moyen d'éclairage 6 peut comprendre une pluralité de guides de lumière distincts dédiés chacun à une fonction photométrique.

Ce guide de lumière 39 est formé à partir d'un plastique transparent. Dans un exemple de réalisation, le guide de lumière 39 prend une forme d'arc. Autrement dit, le guide de lumière s'étend selon une courbure qui dans l'exemple représenté sur la figure 8 forme un « U ». Cette forme en « U » délimite ainsi la troisième fonction photométrique 23 et la partie située entre des branches 40 et une base 41 du « U » délimite la première fonction photométrique 1. Chaque extrémité des branches 40 du « U » est placée au droit de chaque partie latérale 26a et 26c de l'extrémité prismatique 26. Ainsi, le flux lumineux émis par les diodes additionnelles 36 et 37 est redressé par les parties latérales 26a et 26c puis entre dans le guide de lumière 39 par ces extrémités. A ce stade, la direction du flux lumineux est sensiblement parallèle à une direction longitudinale dans laquelle s'étend chaque branche 40 du « U ». Le flux lumineux parcourt alors les branches 40 de ce « U » sans sortir sur ses côtés. La base 41 s'étend dans une direction globalement perpendiculaire à la direction longitudinale des branches 40. Cette configuration permet au flux lumineux de sortir du guide de lumière 39 au niveau de la base 41 de sorte à rendre apparent la troisième fonction photométrique 23, par exemple la fonction lampe de ville ou clignotant.

Il est important de noter que la pluralité de diodes électroluminescentes 14 est utilisée à la fois pour la première fonction photométrique 1 et pour la troisième fonction photométrique 23. En effet, les diodes additionnelles 36 et 37 font parties de la pluralité de diodes électroluminescentes 14 et sont utilisées dans le cadre des deux fonctions citées précédemment. Ainsi, quand la fonction éclairage diurne est utilisée, toutes les diodes électroluminescentes, y compris les diodes additionnelles 36 et 37, sont activées. Le moyen d'éclairage 6 fournit alors un flux lumineux au niveau de la base 41 du guide de lumière 39 et entre les branches 40 de ce même guide de lumière, c'est-à-dire au niveau du réflecteur 27. En revanche, quand la troisième fonction photométrique 23 est activée, on allume seulement les diodes additionnelles 36 et 37 de sorte que seule la base 41 du guide de lumière est apparente. Une telle structure permet d'éviter l'actionnement ou l'ouverture du phare escamotable tout en activant la fonction lampe de ville, cette dernière étant suffisamment discriminante par rapport à l'éclairage diurne pour ne pas être confondue avec ce dernier.

Bien entendu, l'invention couvre également le cas où la troisième fonction photométrique est activée en même temps qu'est activée la deuxième fonction photométrique. On allume ainsi le projecteur pour mettre en oeuvre la fonction code ou route tout en allumant la fonction lampe de ville.

## Revendications

1. Dispositif d'éclairage et/ou de signalisation agencé pour réaliser au moins une première fonction photométrique (1) et une deuxième fonction photométrique (2), **caractérisé en ce que** le dispositif comprend au moins un élément mobile (8) sur lequel est installée au moins la première fonction photométrique (1) et dont le mouvement est placé sous la dépendance de la commande de la deuxième fonction photométrique (2).

2. Dispositif selon la revendication 1, dans lequel la commande de la première fonction photométrique (1) est placée sous la dépendance de la deuxième fonction photométrique (2).

3. Dispositif selon l'une quelconque des revendications 1 à 2, dans lequel l'élément (8) est mobile en rotation.

4. Dispositif selon l'une quelconque des revendications précédentes, dans lequel la première fonction photométrique (1) comprend au moins une source lumineuse comprenant au moins une diode électroluminescente (14, 36, 37).

5. Dispositif selon la revendication 4, dans lequel la première fonction photométrique (1) prend la forme d'un moyen d'éclairage (6) qui comprend un support (13) recevant ladite source lumineuse.

6. Dispositif selon l'une quelconque des revendications précédentes, dans lequel la deuxième fonction photométrique (2) prend la forme d'un projecteur (5).

7. Dispositif selon l'une quelconque des revendications précédentes, dans lequel l'élément mobile (6) supporte la deuxième fonction photométrique (2).

8. Dispositif selon l'une quelconque des revendications 1 à 6, comprenant un boîtier (3) à l'intérieur duquel sont installés un projecteur (15) formant deuxième fonction photométrique (2) et une source lumineuse à diode photoluminescence (14, 36, 37) constitutive de la première fonction photométrique (1).

9. Dispositif selon la revendication 8, dans lequel la première fonction photométrique (1) prend la forme d'un moyen d'éclairage (6) qui comprend un support (13) recevant une source lumineuse, ledit un moyen d'éclairage (6) formant un écran de protection du boîtier (3).

10. Dispositif selon l'une quelconque des revendications précédentes, dans lequel la première fonction photométrique (1) sert également à réaliser une troisième fonction photométrique (23).

11. Dispositif selon la revendication 10, dans lequel la première fonction photométrique (1) comprend au moins une source lumineuse comprenant une pluralité de diodes électroluminescentes (14), une partie (22, 36, 37) de ces diodes étant agencée pour réaliser la troisième fonction photométrique (23).

12. Dispositif selon l'une des revendications 5 ou 11, dans lequel le moyen d'éclairage (6) comprend un support (13) formé par un circuit imprimé et au moins un guide de lumière (39).
